(19) Europäisches Patentamt
European Patent Office
Office européen des brevets

(11) **EP 4 607 698 A1**

(12) **EUROPEAN PATENT APPLICATION**
published in accordance with Art. 153(4) EPC

(43) Date of publication:
**27.08.2025 Bulletin 2025/35**

(21) Application number: **22962829.2**

(22) Date of filing: **18.10.2022**

(51) International Patent Classification (IPC):
**H01Q 3/08** (2006.01)    **H01Q 1/28** (2006.01)
**G01S 3/38** (2006.01)

(52) Cooperative Patent Classification (CPC):
**G01S 3/38; H01Q 1/12; H01Q 1/28; H01Q 3/08**

(86) International application number:
**PCT/KR2022/015782**

(87) International publication number:
**WO 2024/085267 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.10.2022 KR 20220132860**

(71) Applicant: **Intellian Technologies, Inc.
Pyeongtaek-si, Gyeonggi-do 17709 (KR)**

(72) Inventors:
• **CHO, Seok Ho
Incheon 21608 (KR)**
• **LIM, Changhyun
Suwon-si Gyeonggi-do 16689 (KR)**
• **CHO, Inhee
Siheung-si Gyeonggi-do 15010 (KR)**

(74) Representative: **DREISS Patentanwälte PartG mbB
Friedrichstraße 6
70174 Stuttgart (DE)**

(54) **POSTURE CONTROL DEVICE FOR SATELLITE ANTENNA AND OPERATION METHOD THEREOF**

(57)    A posture control device for a satellite antenna and an operation method thereof are disclosed. The posture control device for a satellite antenna, according to an embodiment, may comprise: a memory which includes instructions; and a processor which is electrically connected to the memory and executes the instructions, wherein, when the instructions are executed by the processor, the processor performs a plurality of operations comprising: an operation of acquiring first coordinates of a satellite antenna for satellite communication; an operation of calculating a first matrix associated with tilts of the satellite antenna according to environments in which the satellite antenna is installed; and an operation of acquiring second coordinates of the satellite antenna by using the first coordinates and the first matrix.

FIG. 2

**Description**

**TECHNICAL FIELD**

The following disclosure relates to a posture control device for a satellite antenna and an operating method thereof.

**BACKGROUND ART**

A satellite antenna (e.g., a directional antenna) must be able to track a satellite (e.g., a low earth orbit satellite and a medium earth orbit satellite) in real time. A satellite antenna may include a device (e.g., a stabilizer) that may control the posture of the satellite antenna for directing a satellite in real time. For example, a satellite antenna may be tilted depending on the installation environment. A posture control device may calculate a coordinate for directing a satellite based on the tilt of the satellite antenna.

The above description is information the inventor(s) acquired during the course of conceiving the present disclosure, or already possessed at the time, and is not necessarily art publicly known before the present application was filed.

**DISCLOSURE OF THE INVENTION**

**TECHNICAL GOALS**

According to an embodiment, a posture control device may improve the accuracy of tracking of a satellite antenna with respect to a satellite by calculating coordinates capable of correcting a tilt of the satellite antenna, in which the tilt that may be generated according to an installation environment of the satellite antenna.

However, the technical goals are not limited to the foregoing goals, and there may be other technical goals.

**TECHNICAL SOLUTIONS**

According to an embodiment, a posture control device for a satellite antenna includes a memory configured to store instructions and a processor electrically connected to the memory and configured to execute the instructions, in which, when the instructions are executed by the processor, the processor is configured to perform a plurality of operations, in which the plurality of operations includes acquiring a first coordinate of a satellite antenna for satellite communication, calculating a first matrix associated with a tilt of the satellite antenna according to an environment in which the satellite antenna is installed, and acquiring a second coordinate of the satellite antenna using the first coordinate and the first matrix.

The acquiring of the first coordinate may include receiving, from a modem, a reference azimuth of the satellite antenna and a reference elevation of the satellite antenna for the satellite communication and calculating the first coordinate expressed as a Cartesian coordinate using the reference azimuth and the reference elevation.

The first matrix may be expressed by the Equation below.

$$A = \begin{pmatrix} cos(P) & sin(P) \times sin(R) & sin(P) \times cos(R) \\ 0 & cos(R) & -sin(R) \\ -sin(P) & cos(P) \times sin(R) & cos(P) \times cos(R) \end{pmatrix}$$

Here, A denotes the first matrix, P denotes a pitch of the satellite antenna, and R denotes a roll of the satellite antenna.

The second coordinate may be calculated as shown in the Equation below,

$$T_{ref} = A \times T_{inv}$$

Here, Tref denotes a second matrix for the first coordinate, Tinv denotes a third matrix for the second coordinate, and A denotes the first matrix.

The plurality of operations may further include calculating, using the second coordinate, a target elevation of the satellite antenna for tracking a satellite and a target cross-level of the satellite antenna for tracking a satellite.

According to an embodiment, an operating method of a posture control device includes acquiring a first coordinate of a satellite antenna for satellite communication, calculating a first matrix associated with a tilt of the satellite antenna according to an environment in which the satellite antenna is installed, and acquiring a second coordinate of the satellite antenna using the first coordinate and the first matrix.

The acquiring of the first coordinate may include receiving, from a modem, a reference azimuth of the satellite antenna and a reference elevation of the satellite antenna for the satellite communication and calculating the first coordinate expressed as a Cartesian coordinate using the reference azimuth and the reference elevation.

The first matrix may be expressed by the Equation below.

$$A = \begin{pmatrix} cos(P) & sin(P) \times sin(R) & sin(P) \times cos(R) \\ 0 & cos(R) & -sin(R) \\ -sin(P) & cos(P) \times sin(R) & cos(P) \times cos(R) \end{pmatrix}$$

Here, A denotes the first matrix, P denotes a pitch of the satellite antenna, and R denotes a roll of the satellite antenna.

The second coordinate may be calculated as shown in the Equation below.

$$T_{ref} = A \times T_{inv}$$

Here, Tref denotes a second matrix for the first coordinate, Tinv denotes a third matrix for the second coordinate, and A denotes the first matrix.

The operating method may further include calculating, using the second coordinate, a target elevation of the satellite antenna for tracking a satellite and a target cross-level of the satellite antenna for tracking a satellite.

BRIEF DESCRIPTION OF DRAWINGS

FIG. 1 is a diagram illustrating a satellite antenna according to an embodiment.

FIG. 2 is a flowchart illustrating an operation of a posture control device, according to an embodiment.

FIG. 3 is a diagram illustrating a coordinate transformation method according to an embodiment.

FIG. 4 shows a simulation result of a posture control device, according to an embodiment.

FIG. 5 is a schematic block diagram of a posture control device, according to an embodiment.

BEST MODE FOR CARRYING OUT THE INVENTION

The following detailed structural or functional description is provided as an example only and various alterations and modifications may be made to embodiments. Accordingly, the embodiments are not to be construed as limited to the disclosure and should be understood to include all changes, equivalents, or replacements within the idea and the technical scope of the disclosure.

Although terms, such as first, second, and the like are used to describe various components, the components are not limited to the terms. These terms should be used only to distinguish one component from another component. For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. As used herein, "A or B", "at least one of A and B", "at least one of A or B", "A, B or C", "at least one of A, B and C", and "at least one of A, B, or C," each of which may include any one of the items listed together in the corresponding one of the phrases, or all possible combinations thereof. It will be further understood that the terms "comprises/comprising" and/or "includes/including," when used herein, specify the presence of stated features, integers, steps, operations, elements, and/or components, but do not preclude the presence or addition of one or more other features, integers, steps, operations, elements, components and/or groups thereof.

Unless otherwise defined, all terms used herein including technical or scientific terms have the same meaning as commonly understood by one of ordinary skill in the art to which this disclosure pertains. Terms, such as those defined in commonly used dictionaries, should be construed to have meanings matching with contextual meanings in the relevant art, and are not to be construed to have an ideal or excessively formal meaning unless otherwise defined herein.

As used in connection with the present disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more of functions. For example, according to an embodiment, the module may be implemented in a form of an application-specific integrated circuit (ASIC).

The term "unit" or the like used herein may refer to a software or hardware component, such as a field-programmable gate array (FPGA) or an ASIC, and the "unit" performs predefined functions. However, the term "unit" is not limited to software or hardware. A "unit" may be configured to be in an addressable storage medium or configured to operate one or more processors. Accordingly, the "unit" may include, for example, components, such as software components, object-oriented software components, class components, and task components, processes, functions, attributes, procedures, sub-routines, segments of program code, drivers, firmware, microcode, circuitry, data, databases, data structures, tables, arrays, and variables. The functionalities provided in the components and "units" may be combined into fewer components and "units" or may be further separated into additional components and "units." Furthermore, the components and "units" may be implemented to operate one or more of central processing units (CPUs) within a device or a security multimedia card. In addition, "unit" may include one or more of processors.

Hereinafter, embodiments will be described in detail with reference to the accompanying drawings. When describing the embodiments with reference to the accompanying drawings, like reference numerals refer to like elements and a repeated description related thereto will be omitted.

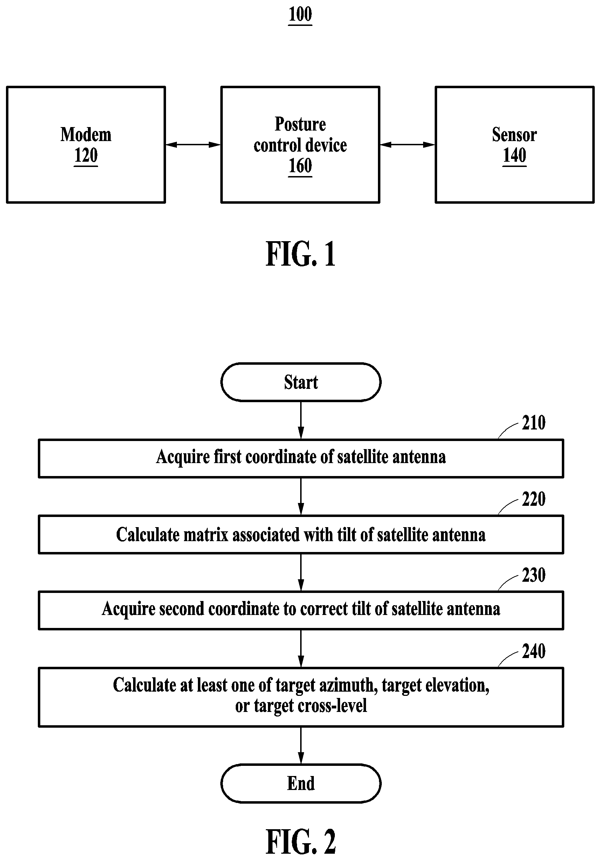

FIG. 1 is a diagram illustrating a satellite antenna according to an embodiment.

Referring to FIG. 1, according to an embodiment, a satellite antenna 100 may include a modem 120, a sensor 140, and a posture control device 160 (e.g., a stabilizer).

According to an embodiment, the modem 120 may receive information (e.g., two-line element (TLE) information) from a satellite (e.g., a low earth orbit satellite and a medium earth orbit satellite). The modem 120 may transmit, to the posture control device 160, information that is necessary for the satellite antenna 100 to track the satellite. The modem 120 may be included inside the satellite antenna 100 but is not limited thereto. For example, the modem 120 may be implemented separately from the satellite antenna 100.

According to an embodiment, the posture control device 160 may acquire a reference coordinate of the satellite antenna 100. For example, the posture control device 160 may receive a reference position of the satellite antenna 100 from the modem 120 and convert the reference position into the reference coordinate. The reference position may be expressed as a reference azimuth and/or a reference elevation of the satellite antenna 100. The reference coordinate may be a coordinate corresponding to the location of the satellite antenna 100 to perform satellite communication by the satellite antenna 100 in an ideal state. That is, the reference coordinate may be a coordinate for the satellite antenna 100 for directing the satellite when the tilt of the satellite antenna 100 is 0 degrees. The reference coordinate may be a Cartesian coordinate.

According to an embodiment, the posture control device 160 may acquire the tilt of the satellite antenna 100. For example, the posture control device 160 may receive the tilt of the satellite antenna 100 from the sensor 140 (e.g., an inertial measurement unit (IMU) sensor). The tilt of the satellite antenna 100 may include the roll of the satellite antenna 100 and/or the pitch of the satellite antenna 100.

According to an embodiment, the posture control device 160 may perform an operation of controlling the posture of the satellite antenna 100 based on the tilt of the satellite antenna 100. A method of controlling the posture of the satellite antenna 100 is described in detail below with reference to FIG. 2.

According to an embodiment, the posture control device 160 may be included inside the satellite antenna 100 but is not limited thereto. The posture control device 160 may be implemented separately from the satellite antenna 100. For example, the posture control device 160 may be implemented as a device such as a laptop, a smartphone, or a personal computer (PC).

According to an embodiment, the sensor 140 may be a sensor (e.g., an IMU sensor) including an accelerometer and a gyro sensor. The sensor 140 may be used to acquire the tilt and velocity (e.g., angular velocity) of the satellite antenna 100. The sensor 140 may be installed such that an x-axis among axes of the sensor 140 (e.g., an x-axis, a y-axis, and a z-axis) is aligned with a feedhorn of the satellite antenna 100.

FIG. 2 is a flowchart illustrating an operation of a posture control device, according to an embodiment.

Referring to FIG. 2, according to an embodiment, operations 210 to 240 may be performed sequentially but are not limited thereto. For example, operation 240 may be omitted. Two or more operations may also be performed in parallel.

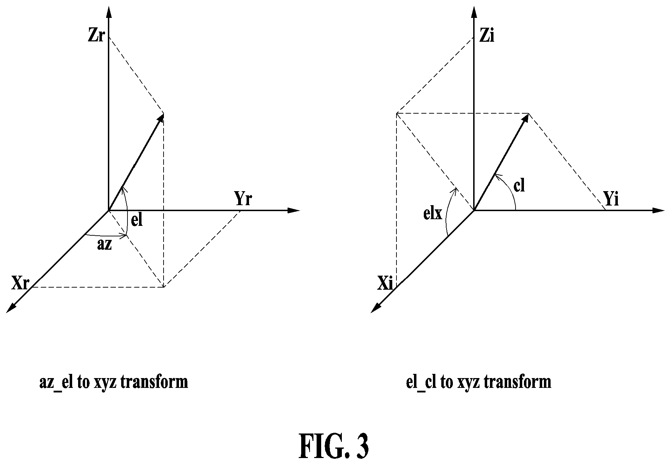

In operation 210, a posture control device (e.g., the posture control device 160 of FIG. 1) may acquire a first coordinate (e.g., a reference coordinate) of a satellite antenna (e.g., the satellite antenna 100 of FIG. 1). For example, the posture control device 160 may receive a reference position of the satellite antenna 100 from the modem 120 and convert the reference position into the first coordinate. The reference position may include a reference azimuth and/or a reference elevation of the satellite antenna 100. The posture control device 160 may adjust the reference azimuth based on the structure of the satellite antenna 100 and/or the installation location of the sensor 140. For example, the posture control device 160 may adjust the reference azimuth to 0 degrees when the sensor 140 is installed in the satellite antenna 100 to rotate together with the satellite antenna 100 in the azimuth direction. In addition, when the satellite antenna 100 performs an operation of avoiding a keyhole, the posture control device 100 may also set, as the reference azimuth, an azimuth offset from the initial position of the keyhole. A method of converting the reference position (e.g., the reference azimuth and the reference elevation) of the satellite antenna 100 into the first coordinate is described in detail below with reference to FIG. 3.

In operation 220, the posture control device 160 may acquire the tilt of the satellite antenna 100 and calculate a matrix associated with the tilt of the satellite antenna 100.

According to an embodiment, the posture control device 160 may acquire the tilt of the satellite antenna 100 using a sensor (e.g., the sensor 140 of FIG. 1). The tilt of the satellite antenna 100 may include the roll of the satellite antenna 100 and/or the pitch of the satellite antenna 100.

According to an embodiment, the posture control device 160 may calculate the matrix associated with the tilt of the satellite antenna 100. For example, the posture control device 160 may calculate the matrix as shown in the following Equation.

[Equation 1]

$$A = \begin{pmatrix} cos(P) & sin(P) \times sin(R) & sin(P) \times cos(R) \\ 0 & cos(R) & -sin(R) \\ -sin(P) & cos(P) \times sin(R) & cos(P) \times cos(R) \end{pmatrix}$$

Here, A denotes the matrix associated with the tile of the satellite antenna 100, P denotes the pitch of the satellite antenna 100, and R denotes the roll of the satellite antenna 100.

In operation 230, the posture control device 160 may acquire a second coordinate of the satellite antenna 100. The satellite antenna 100 may be tilted depending on the installation environment. The second coordinate may be a coordinate that corrects the tilt of the satellite antenna 100 to improve the accuracy of tracking of the satellite antenna 100 with respect to a satellite. The posture control device 160 may acquire the second coordinate of the satellite antenna 100 using the first coordinate (e.g., the first coordinate acquired in operation 210) and/or the matrix (e.g., the matrix calculated in operation 220) associated with the tilt of the satellite antenna 100. For example, the posture control device 160 may calculate the second coordinate as in shown in the following Equation.

[Equation 2]

$$T_{ref} = A \times T_{inv}$$

$$T_{inv} = A^{-1} \times T_{ref}$$

Here, Tref denotes a matrix for the first coordinate, Tinv denotes a matrix for the second coordinate, and A denotes the matrix (e.g., the matrix of Equation 1) associated with the tilt of the satellite antenna 100.

Summarizing Equation 2, the second coordinate may be expressed by the following Equation.

[Equation 3]

$$Y_i = X_r \times sin(P) \times sin(R) + Y_r \times cos(R) + Z_r \times cos(P) \times sin(R)$$

$$Z_i = (Y_i \times cos(R) - Y_r) / sin(R)$$

$$X_i = (X_r - Y_i \times sin(P) \times sin(R) - Z_i \times sin(P) \times cos(R)) / cos(P)$$

Here, $X_i$, $Y_i$, and $Z_i$ denote the second coordinate, $X_r$, $Y_r$, and $Z_r$ denote the first coordinate, P denotes the pitch of the satellite antenna 100, and R denotes the roll of the satellite antenna 100.

In operation 240, the posture control device 160 may calculate, using the second coordinate (e.g., the second coordinate calculated in operation 230), a target elevation of the satellite antenna 100 and a target cross-level of the satellite antenna 100. The target elevation and the target cross-level may be angles for directing the satellite in a state in which the satellite antenna 100 is tilted. A method of calculating the target elevation and the target cross-level using the second coordinate is described in detail below with reference to FIG. 3.

According to an embodiment, the posture control device 160 may improve the accuracy of tracking of the satellite antenna 100 with respect to the satellite by calculating a coordinate (e.g., the second coordinate) that may correct the tilt of the satellite antenna 100, in which the tilt may be generated depending on the installation environment of the satellite antenna 100.

FIG. 3 is a diagram illustrating a coordinate transformation method according to an embodiment.

Referring to FIG. 3, according to an embodiment, a posture control device (e.g., the posture control device 160 of FIG. 1) may transform a reference position (e.g., a reference azimuth and/or a reference elevation) of a satellite antenna (e.g., the satellite antenna 100 of FIG. 1) into a first coordinate (e.g., the reference coordinate). The first coordinate may be a Cartesian coordinate. For example, the posture control device 160 may calculate the first coordinate as shown in the following Equation.

[Equation 4]

$$Xr = cos(AZ) \times cos(EL)$$

$$Yr = sin(AZ) \times cos(EL)$$

$$Zr = sin(EL)$$

Here, AZ denotes the reference azimuth of the satellite antenna 100, EL denotes the reference elevation of the satellite antenna 100, and $Xr$, $Yr$, and $Zr$ denote the first coordinate (e.g., the first coordinate of Equation 3).

According to an embodiment, the posture control device 160 may calculate a target elevation and a target cross-level of the satellite antenna 100 using a second coordinate. For example, the posture control device 160 may calculate the target elevation and the target cross-level as shown in the following Equation.

[Equation 5]

$$elx = atan2(Zi, Xi)$$

$$cl = acos(Yi)$$

Here, elx denotes the target elevation, cl denotes the target cross-level, and $Xi$, $Yi$, and $Zi$ denote the second coordinate (e.g., the second coordinate of Equation 3) of the satellite antenna.

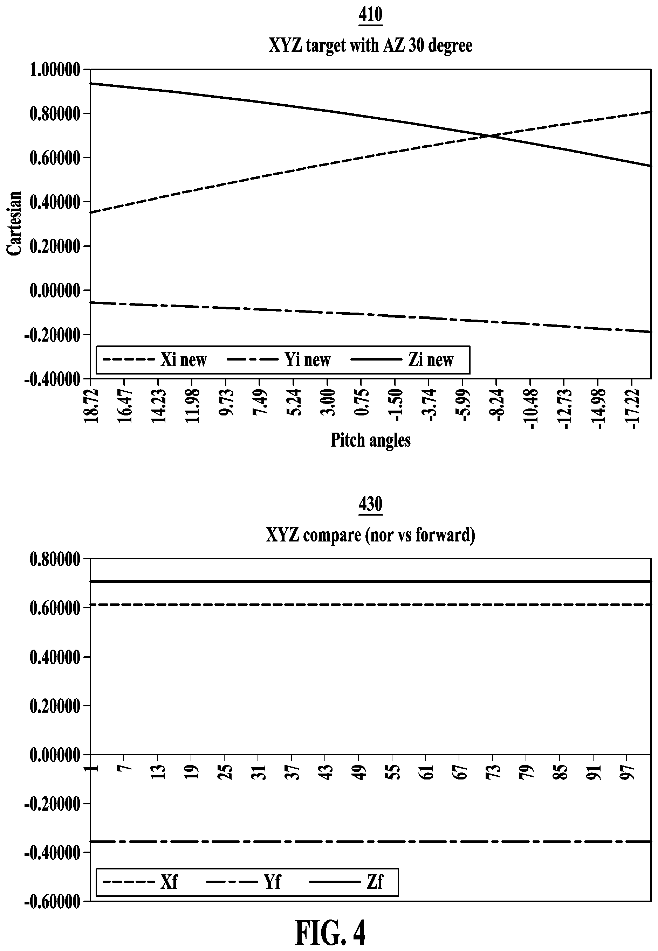

FIG. 4 shows a simulation result of a posture control device, according to another embodiment.

Referring to FIG. 4, according to an embodiment, a left graph 410 may represent a relationship between the pitch of a satellite antenna (e.g., the satellite antenna 100 of FIG. 1) and a second coordinate (e.g., the second coordinate (Xi, Yi, Zi) of Equation 3) of the satellite antenna 100, and a right graph 430 may represent a reference coordinate of the satellite antenna 100.

Referring to the graph 410, it may be seen that the second coordinate (Xi, Yi, Zi) of the satellite antenna 100 is changed according to the pitch of the satellite antenna 100. That is, it may be seen that the second coordinate (Xi, Yi, Zi) of the satellite antenna 100 is changed according to the roll of the satellite antenna 100 to correct the tilt of the satellite antenna 100.

Referring to graph 430, it may be seen that the posture of the satellite antenna 100 is stabilized as a result of an operation of controlling the posture of the satellite antenna 100 of a posture control device (e.g., the posture control device 160 of FIG. 1).

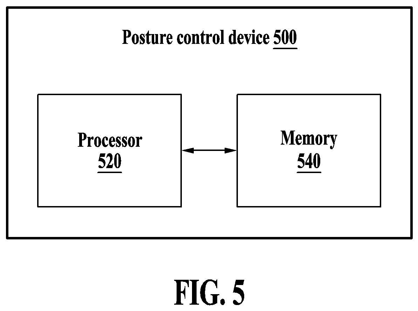

FIG. 5 is a schematic block diagram of a posture control device, according to an embodiment.

Referring to FIG. 5, according to an embodiment, a posture control device 500 (e.g., the posture control device 160 of FIG. 1) may include a memory 540 and a processor 520.

The memory 540 may store instructions (or programs) executable by the processor 520. For example, the instructions may include instructions for executing an operation of the processor 520 and/or an operation of each component of the processor 520.

The processor 520 may process data stored in the memory 540. The processor 520 may execute computer-readable code (e.g., software) stored in the memory 540 and instructions triggered by the processor 520.

The processor 520 may be a data-processing device implemented by hardware having a circuit of a physical structure to execute desired operations. For example, the desired operations may include code or instructions included in a program.

For example, the hardware-implemented data processing device may include a microprocessor, a central processing unit (CPU), a processor core, a multi-core processor, a multiprocessor, an application-specific integrated circuit (ASIC), and a field-programmable gate array (FPGA).

An operation performed by the processor 520 may be substantially the same as the operation of the posture control device 160 described above with reference to FIGS. 1 to 3. Accordingly, a detailed description thereof is not repeated herein.

The units described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, an FPGA, a programmable logic unit (PLU), a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciate that a processing device may include multiple processing elements and/or multiple types of processing elements. For example, the processing device may include a plurality of processors, or a single processor and a single controller. In addition, different processing configurations are possible, such as parallel processors.

Software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software is stored and executed in a distributed fashion. The software and data may be stored in a non-transitory computer-readable recording medium.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs or DVDs; magnetooptical media such as floptical disks; and hardware devices that are specially configured to store and perform program instructions, such as read-only memory (ROM), RAM, flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

## Claims

1. A posture control device for a satellite antenna, the posture control device comprising:

   a memory configured to store instructions; and
   a processor electrically connected to the memory and configured to execute the instructions,
   wherein, when the instructions are executed by the processor, the processor is configured to perform a plurality of operations,
   wherein the plurality of operations comprises:

   acquiring a first coordinate of a satellite antenna for satellite communication;
   calculating a first matrix associated with a tilt of the satellite antenna according to an environment in which the satellite antenna is installed; and
   acquiring a second coordinate of the satellite antenna using the first coordinate and the first matrix.

2. The posture control device of claim 1, wherein the acquiring of the first coordinate comprises:

   receiving, from a modem, a reference azimuth of the satellite antenna and a reference elevation of the satellite antenna for the satellite communication; and
   calculating the first coordinate expressed as a Cartesian coordinate using the reference azimuth and the reference elevation.

3. The posture control device of claim 1, wherein the first matrix is expressed by Equation below,

$$A = \begin{pmatrix} \cos(P) & \sin(P) \times \sin(R) & \sin(P) \times \cos(R) \\ 0 & \cos(R) & -\sin(R) \\ -\sin(P) & \cos(P) \times \sin(R) & \cos(P) \times \cos(R) \end{pmatrix}$$

   here, A denotes the first matrix, P denotes a pitch of the satellite antenna, and R denotes a roll of the satellite antenna.

4. The posture control device of claim 3, wherein the second coordinate is calculated as shown in Equation below,

$$T_{ref} = A \times T_{inv}$$

   here, Tref denotes a second matrix for the first coordinate, Tinv denotes a third matrix for the second coordinate, and A denotes the first matrix.

5. The posture control device of claim 1, wherein the plurality of operations further comprises calculating, using the second coordinate, a target elevation of the satellite antenna for tracking a satellite and a target cross-level of the satellite antenna for tracking the satellite.

6. An operating method of a posture control device, the operating method comprising:

   acquiring a first coordinate of a satellite antenna for satellite communication;
   calculating a first matrix associated with a tilt of the satellite antenna according to an environment in which the satellite antenna is installed; and
   acquiring a second coordinate of the satellite antenna using the first coordinate and the first matrix.

**7.** The operating method of claim 6, wherein the acquiring of the first coordinate comprises:

receiving, from a modem, a reference azimuth of the satellite antenna and a reference elevation of the satellite antenna for the satellite communication; and
calculating the first coordinate expressed as a Cartesian coordinate using the reference azimuth and the reference elevation.

**8.** The operating method of claim 6, wherein the first matrix is expressed by Equation below,

$$A = \begin{pmatrix} cos(P) & sin(P) \times sin(R) & sin(P) \times cos(R) \\ 0 & cos(R) & -sin(R) \\ -sin(P) & cos(P) \times sin(R) & cos(P) \times cos(R) \end{pmatrix}$$

here, A denotes the first matrix, P denotes a pitch of the satellite antenna, and R denotes a roll of the satellite antenna.

**9.** The operating method of claim 8, wherein the second coordinate is calculated as shown in Equation below,

$$T_{ref} = A \times T_{inv}$$

here, Tref denotes a second matrix for the first coordinate, Tinv denotes a third matrix for the second coordinate, and A denotes the first matrix.

**10.** The operating method of claim 6, further comprising:
calculating, using the second coordinate, a target elevation of the satellite antenna for tracking a satellite and a target cross-level of the satellite antenna for tracking the satellite.

<u>100</u>

| Modem <br> <u>120</u> | Posture <br> control device <br> <u>160</u> | Sensor <br> <u>140</u> |

**FIG. 1**

```
                    ┌─────────────┐
                    │    Start    │
                    └─────────────┘
                           │
                           ▼
   ┌───────────────────────────────────────────────────┐  ╱ 210
   │   Acquire first coordinate of satellite antenna   │
   └───────────────────────────────────────────────────┘
                           │
                           ▼
   ┌───────────────────────────────────────────────────┐  ╱ 220
   │  Calculate matrix associated with tilt of satellite antenna │
   └───────────────────────────────────────────────────┘
                           │
                           ▼
   ┌───────────────────────────────────────────────────┐  ╱ 230
   │  Acquire second coordinate to correct tilt of satellite antenna │
   └───────────────────────────────────────────────────┘
                           │
                           ▼
   ┌───────────────────────────────────────────────────┐  ╱ 240
   │  Calculate at least one of target azimuth, target elevation, │
   │            or target cross-level                  │
   └───────────────────────────────────────────────────┘
                           │
                           ▼
                    ┌─────────────┐
                    │     End     │
                    └─────────────┘
```

**FIG. 2**

az_el to xyz transform          el_cl to xyz transform

# FIG. 3

**410**

**XYZ target with AZ 30 degree**

**430**

**XYZ compare (nor vs forward)**

**FIG. 4**

**Posture control device 500**

**Processor 520** ⟷ **Memory 540**

**FIG. 5**

## INTERNATIONAL SEARCH REPORT

| International application No. |
| --- |
| **PCT/KR2022/015782** |

**A. CLASSIFICATION OF SUBJECT MATTER**

**H01Q 3/08**(2006.01)i; **H01Q 1/28**(2006.01)i; **G01S 3/38**(2006.01)i

According to International Patent Classification (IPC) or to both national classification and IPC

**B. FIELDS SEARCHED**

Minimum documentation searched (classification system followed by classification symbols)

H01Q 3/08(2006.01); G01S 19/23(2010.01); H01Q 1/12(2006.01); H01Q 1/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위성 안테나(satellite antenna), 위치(location), 좌표(coordinate), 기울기(tilt), 매트릭스(matrix), 제어(control)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | KR 10-1149120 B1 (KOREA ELECTRIC POWER CORPORATION) 25 May 2012 (2012-05-25)<br>See paragraphs [0038]-[0056] and figures 1-5. | 1,2,5-7,10<br><br>3,4,8,9 |
| Y | KR 10-2007-0060630 A (ELECTRONICS AND TELECOMMUNICATIONS RESEARCH INSTITUTE) 13 June 2007 (2007-06-13)<br>See paragraph [0033], claim 5 and figure 1. | 1,2,5-7,10 |
| Y | KR 10-1925570 B1 (AGENCY FOR DEFENSE DEVELOPMENT) 06 December 2018 (2018-12-06)<br>See paragraph [0035]. | 2,7 |
| A | KR 10-2005-0011119 A (PHILL SAT CO., LTD.) 29 January 2005 (2005-01-29)<br>See claim 1 and figure 2. | 1-10 |

☑ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **11 July 2023** | **11 July 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2022/015782**

**C.    DOCUMENTS CONSIDERED TO BE RELEVANT**

| Category* | Citation of document, with indication, where appropriate, of the relevant passages | Relevant to claim No. |
|---|---|---|
| A | 조규한. 위성통신 안테나의 위성 지향각도 해석적 모델의 실증. 한국시뮬레이션학회 논문지. Vol. 28, No. 3, pp. 75-82, September 2019 (CHO, Gyuhan. Proof of SATCOM Antenna Heading Angle's Analytical Model. Journal of the Korea Society for Simulation).<br>DOI : 10.9709/JKSS.2019.28.3.075.<br>See pages 75-81. | 1-10 |

Form PCT/ISA/210 (second sheet) (July 2022)

## INTERNATIONAL SEARCH REPORT
### Information on patent family members

International application No.

**PCT/KR2022/015782**

| Patent document cited in search report | | | Publication date (day/month/year) | Patent family member(s) | | | Publication date (day/month/year) |
|---|---|---|---|---|---|---|---|
| KR | 10-1149120 | B1 | 25 May 2012 | KR 10-2011-0072319 | | A | 29 June 2011 |
| KR | 10-2007-0060630 | A | 13 June 2007 | US | 2008-0297427 | A1 | 04 December 2008 |
| | | | | US | 8120541 | B2 | 21 February 2012 |
| | | | | WO | 2007-067016 | A1 | 14 June 2007 |
| KR | 10-1925570 | B1 | 06 December 2018 | None | | | |
| KR | 10-2005-0011119 | A | 29 January 2005 | None | | | |

Form PCT/ISA/210 (patent family annex) (July 2022)